# EUROPEAN PATENT SPECIFICATION

(11) **EP 4 180 763 B1**
(45) Date of publication and mention of the grant of the patent: **28.08.2024**
(21) Application number: 22207469.2
(22) Date of filing: 15.11.2022
(51) Int. Cl.: G01B 11/275, G01B 11/27

(54) **VEHICLE MEASURING APPARATUS AND OPERATING METHOD THEREOF**
FAHRZEUGMESSVORRICHTUNG UND BETRIEBSVERFAHREN DAFÜR
APPAREIL DE MESURE DE VÉHICULE ET SON PROCÉDÉ DE FONCTIONNEMENT

(30) Priority: 16.11.2021 IT 202100029027
(43) Date of publication of application: 17.05.2023
(73) Proprietor: Texa S.p.A., 31050 Monastier di Treviso (TV) (IT)
(72) Inventor: VIANELLO, Bruno, 31050 Monastier di Treviso (TV) (IT)
(74) Representative: Studio Torta S.p.A.

(56) References cited:
- EP-A1- 3 332 212
- US-A1- 2020 239 010

## Description

### TECHNICAL FIELD

This invention relates to a vehicle measuring apparatus and the corresponding method of operation. In particular, this invention concerns the calibration and determination of the actual position of component parts, preferably image acquisition devices, of a vehicle measuring apparatus.

### PRIOR ART

Vehicle measuring apparatuses are known that comprise a base unit resting on a plane, a support structure that is mounted on the base unit and is provided with a support bar that is approximately horizontal, and two side video cameras that are stably mounted on the opposite ends of the support bar to acquire images of a vehicle arranged in a service area.

The images acquired are generally provided to a control unit that processes them via the vehicle measuring algorithms to provide vehicle data regarding some vehicle devices/components/parts. For example, some vehicle measuring algorithms provide vehicle data regarding the arrangement of the vehicle wheels, and/or vehicle data that is useful for calibrating electronic devices of an electronic ADAS (Advanced Driver Assistance Systems) present on board the vehicle and/or vehicle data concerning the position of the vehicle measuring apparatus in relation to the vehicle to be measured.

To be able to operate correctly and ensure a certain precision of the measurement, the vehicle measuring apparatuses must be subject to procedures to calibrate the video cameras to compensate, on a case-by-case basis, for any variations/alterations of their position/orientation in relation to a condition established or detected previously, for example during an initial calibration or set-up step of the vehicle measuring apparatus.

In particular, during transport, and/or assembly, and/or use of the vehicle measuring apparatus, the two video cameras and the support bar are subject to collisions and/or thermal dilations that may cause not-insignificant variations of the position/orientation of the video cameras themselves in relation to the condition previously detected and stored in the vehicle measuring apparatus. These accidental alterations, if not detected with a certain precision, introduce errors that significantly affect the correctness of the vehicle data provided via the vehicle measuring methods mentioned above. To this end, the video cameras must, therefore, be subject to the above-mentioned calibration procedure. Some known calibration procedures involve: manually providing an operator with a calibration panel at a certain distance from the vehicle measuring apparatus before the video cameras themselves in different, pre-determined positions; simultaneously acquiring, via two video cameras, the image of the calibration panel in the various positions; processing the panel images to determine the relative positions of the two video cameras, one in relation to the other; and calibrating the two video cameras based on the relative positions determined.

The implementation of the calibration method for the video cameras described above has numerous technical problems. In particular, the manual intervention for calibration, as well as affecting, in a not insignificant way, the complexity, time, and, thus, cost of the calibration, significantly limits the frequency of execution and increases the risk of error in case of accidental alterations, subsequent to manual calibration. It is also known the solution disclosed in EP 3 332 212 A1.

### DESCRIPTION OF THE INVENTION

The purpose of this invention is, thus, to provide a vehicle measuring apparatus that overcomes the above-mentioned technical issues.

In accordance with this purpose, according to this invention, a vehicle measuring apparatus is provided, as well as its method of operation, as defined in the related independent claims and, preferably, but not necessarily, in any one of the claims dependent thereon.

The claims describe preferred embodiments of this invention forming an integral part of this description.

### BRIEF DESCRIPTION OF THE DRAWINGS

This invention will now be described with reference to the attached drawings that illustrate a non-limiting embodiment thereof, in which:
- - Figure 1 is a perspective view of a vehicle measuring apparatus arranged in a service area produced according to the precepts of this invention,

- Figure 2 is a front perspective view, with parts on an enlarged scale, of the vehicle measuring apparatus shown in Figure 1,
- Figure 3 is lateral perspective view of the vehicle measuring apparatus shown in Figure 1,
- Figure 4 is a raised front view of the vehicle measuring apparatus shown in Figure 1 with minimum dimensions,
- Figure 5 is a raised front view, with parts in cross-section and parts on an enlarged scale, of the vehicle measuring apparatus shown in Figure 1,
- Figures 6 and 7 are two perspective views on an enlarged scale of the two electronic modules of the vehicle measuring apparatus shown in Figure 1,
- Figures 8 and 9 are two perspective views of the vehicle measuring apparatus produced according to a first embodiment,
- Figures 10 and 11 are two perspective views of the vehicle measuring apparatus produced according to a second embodiment,
- Figure 12 is a perspective view of the vehicle measuring apparatus produced according to a third embodiment,
- Figure 13 shows a plan view on an enlarged scale of the target of the vehicle measuring apparatus shown in Figure 12.

### PREFERRED EMBODIMENTS OF THE INVENTION

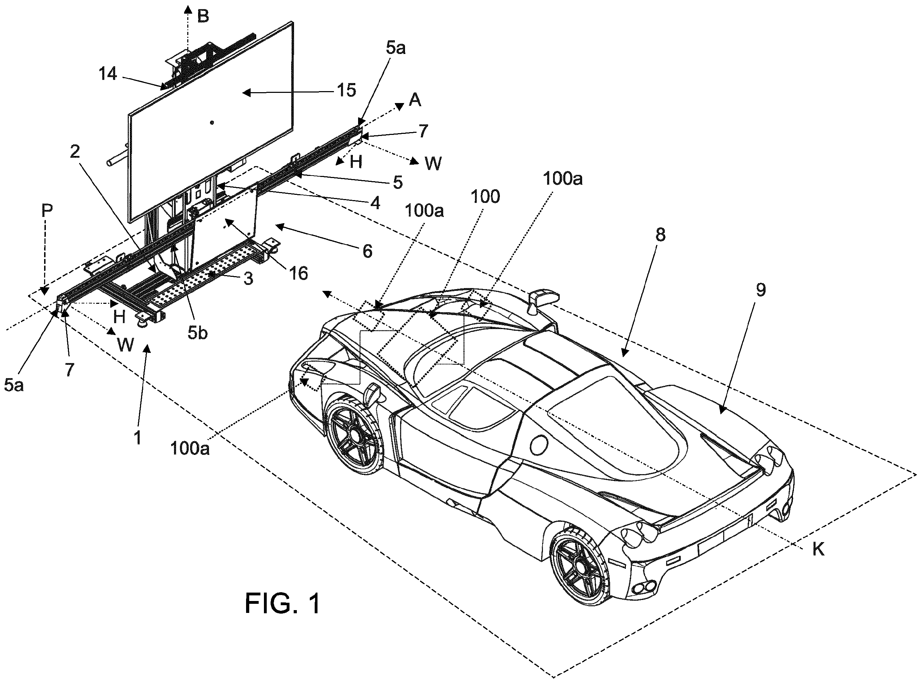

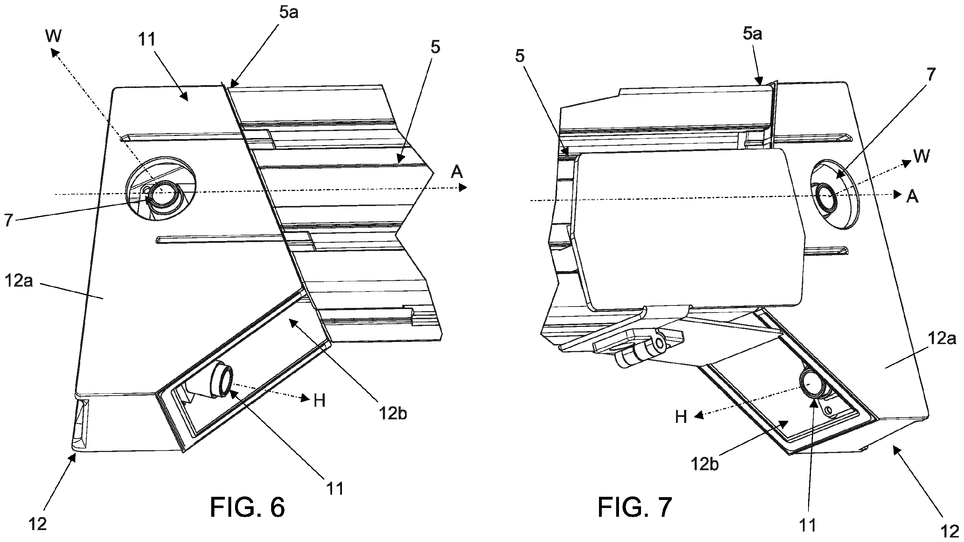

With reference to Figures 1-7, the reference number 1 indicates, as a whole, a vehicle measuring apparatus, such as vehicles, motor vehicles, or the like (vehicles with engines).

As will be described in more detail below, the vehicle measuring apparatus 1 may be configured so as to implement vehicle "measuring methods".

The measuring methods may involve, as desired, the execution of one or more of the following measuring functions: functions to determine the arrangement of the vehicle 9 wheels, and/or functions to calibrate one or more electronic devices of an ADAS (acronym for Advanced Driver Assistance Systems) present on board of the vehicle 9, and/or functions to determine the position of the vehicle measuring apparatus 1 in relation to the vehicle 9, which is being measured. In the discussion that follows, "measuring method" will be understood to refer to a method that, when implemented by the vehicle measuring apparatus 1, ensures that the latter performs one or more measuring functions mentioned above.

With reference to Figure 1, the vehicle measuring apparatus 1 rests on a plane P opposite a vehicle 9 that is positioned, in turn, in a service area 8 adjacent to the vehicle measuring apparatus 1 and has a longitudinal axis K.

With reference to Figures 1-7, the vehicle measuring apparatus 1 comprises a resting platform or base unit 2, which is arranged resting on the plane P and comprises a target 3 conveniently defining a reference or calibration target, which will be described in detail below. The base unit 2 may, preferably, be mobile on the plane P (in one or more directions) for example via wheels 2a.

The vehicle measuring apparatus 1 comprises, in addition, a frame or support structure 4, which is mechanically coupled to the base unit 2. The vehicle measuring apparatus 1 comprises, in addition, a support bar 5, which is mechanically coupled to the support structure 4. The support bar 5 extends along a longitudinal axis A approximately horizontal above the base unit 2. The support bar 5 may comprise, for example, a rod or cross member, and consist of a straight section made of rigid material, preferably metal, for example aluminium or the like, having a preferably quadrangular cross-section, and is sized so as to laterally extend the vehicle measuring apparatus 1 on both opposite sides.

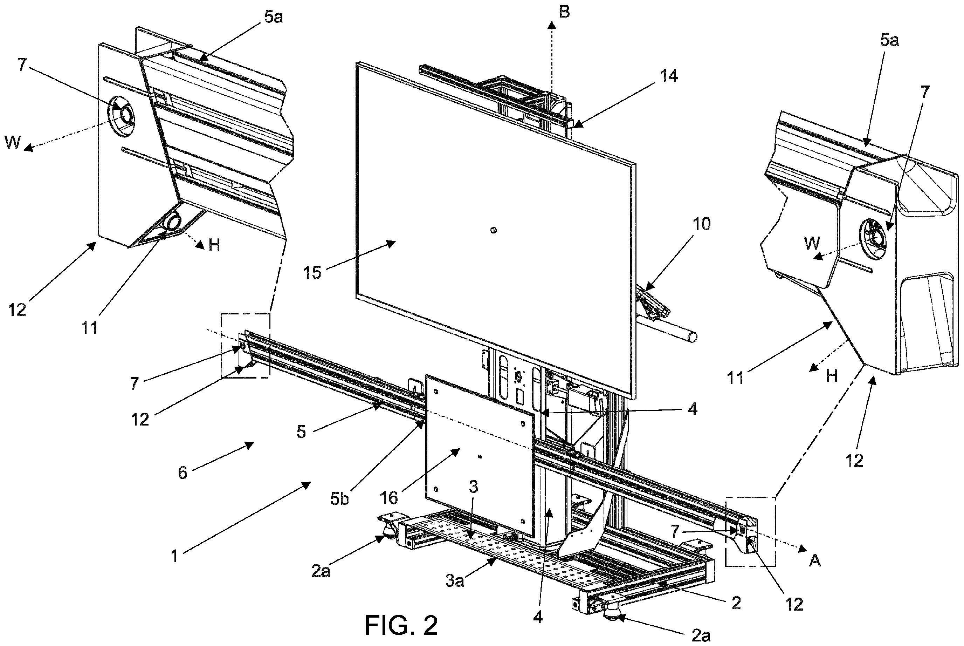

With reference to Figures 2, 5-7, the vehicle measuring apparatus 1 comprises an electronic vehicle measuring system 6 that is configured so as to carry out one or more vehicle measuring methods.

According to one embodiment shown in the attached figures, the electronic vehicle measuring system 6 preferably comprises two main image acquisition devices 7, which are stably mounted (fixed) on the two corresponding opposite ends 5a of the support bar 5 according to relative "poses". In this description, the term "pose" of an image acquisition device refers to its position and the orientation of its image acquisition visual field. The pose of an image acquisition device may be "relative", i.e., defined in relation to the pose of another image acquisition device, or it may be "absolute", i.e., determined in relation to a common, pre-determined reference system. The "relative" pose of an image acquisition device in relation to another image acquisition device is indicative both of its position in relation to the position of the other image acquisition device and the orientation angle of its image acquisition visual field in relation to the orientation of the other image acquisition device.

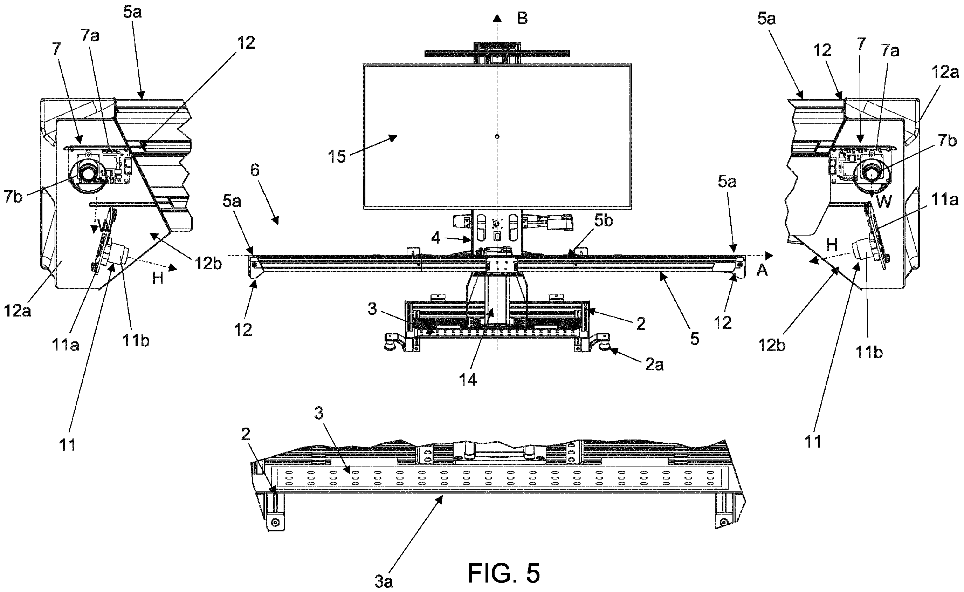

The two main image acquisition devices 7 are stably fixed to the support bar 5 and are positioned on the same (one to the right and one to the left in Figure 5) so that the corresponding visual fields (indicated, for clarity, with the arrows W in Figures 1 and 2) are oriented towards the service area 8 so as to acquire the images relating to the vehicle 9 and/or to component parts and/or additional parts mounted on the same (targets, wheels, or the like), indicated below as "vehicle images". The two main image acquisition devices 7 are configured to provide, in the form of data and/or signals, the vehicle images.

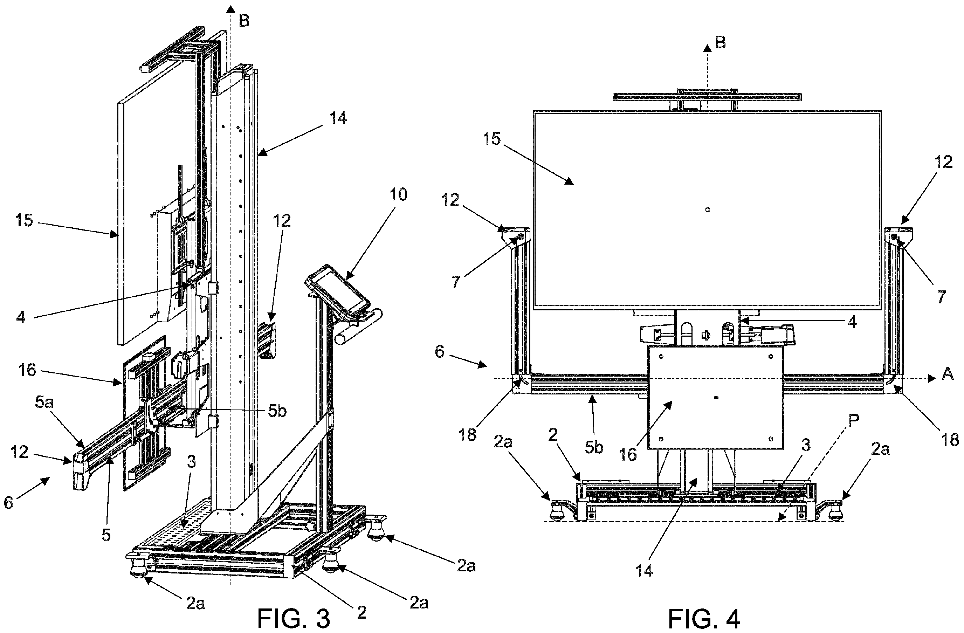

With reference to Figures 2 and 3, the electronic vehicle measuring system 6 comprises, in addition, an electronic control system 10 that is operationally connected to the main image acquisition devices 7 so as to receive the vehicle images captured from them. The two main image acquisition devices 7 may be conveniently controlled by the electronic control system 10 according to a stereoscopic image acquisition method in which the acquisition of stereograms (simultaneous acquisition) is involved.

The electronic control system 10 is, in addition, configured so as to process the vehicle images via one or more measuring functions (algorithms) provided for by the measuring method implemented by the vehicle measuring apparatus 1.

One measuring method implemented by the electronic vehicle measuring system 6 may comprise, for example, an ADAS calibration method for one or more electronic sensor devices comprised in an advanced driver assistance system (ADAS) 100 of the vehicle 9 (Figure 1). The electronic sensor devices may comprise any sensor 100a of an advanced driver assistance system 100 assembled in the vehicle 9. For example, the sensor 100a may comprise: a radar sensor, an optical sensor, a video camera, a LIDAR sensor, an ultrasound sensor, an infrared sensor (IR), or any other similar sensor.

Alternatively, and/or additionally, the electronic vehicle measuring system 6 may be configured so as to implement a measuring method that is designed to determine the position of the vehicle measuring apparatus 1 in relation to the vehicle 9 (or vice versa). Alternatively, and/or additionally, the electronic vehicle measuring system 6 may also be configured so as to carry out/implement a measuring method to determine the arrangement of the wheels of the vehicle 9. The method to determine the arrangement of the wheels of the vehicle 9, the ADAS calibration method and the method to determine the position of the vehicle 9 are known measuring methods and, as a result, will not be described further.

The electronic vehicle measuring system 6 is provided, in addition, with two auxiliary image acquisition devices 11, which are mounted on the support bar 5 at a predetermined distance from each other and in predetermined positions in relation to the two main image acquisition devices 7. In the example illustrated in the attached figures, each of the auxiliary image acquisition devices 11 is arranged stably/rigidly on one end 5a of the support bar 5 in a position immediately adjacent (close) to a main image acquisition devices 7 (one to the right and one to the left in Figure 5). The relative pose of each auxiliary image acquisition device 11 in relation to the corresponding main image acquisition device 7 (adjacent), and/or vice versa, may be predetermined and contained/stored in a memory unit (not illustrated) of the electronic control system 10. The relative pose of each auxiliary image acquisition device 11 in relation to the corresponding main image acquisition device 7, and/or vice versa, may be determined and stored, for example in an initial calibration and/or production step of the vehicle measuring apparatus 1.

The memory unit may also contain information concerning the position and/or distance of each end 5a of the support bar 5 in relation to the position of the adjacent main image acquisition device 7 present on the support bar 5 itself.

It is appropriate to specify that the relative and/or absolute "pose" of an image acquisition device (main 7 and/or auxiliary 11) may be determined by the electronic control system 10 via the implementation of one or more resolving computer vision algorithms, which are configured so as to resolve PnP (Perspective-n-Point) and/or EPnP (Efficient PnP), and/or SQPnP (described by Terzakis and Lourakis in the European conference publication on artificial vision (ECCV) 2020, 478-494), and/or RANSAC equation systems, or the like.

The auxiliary image acquisition devices 11 are arranged on the support bar 5 so that the corresponding visual fields (indicated with the arrows H in Figures 1 and 2) are oriented towards the underlying base unit 2 (towards the bottom) so as to acquire images containing the target 3 of the base unit 2, indicated below as "target images". The two auxiliary image acquisition devices 11 are configured to provide, in the form of data and/or signals, the target images.

The electronic control system 10 is operationally connected to the auxiliary image acquisition devices 11 to receive the target images. The electronic control system 10 is also configured so as to determine, based on the target images received, the actual pose of each auxiliary image acquisition device 11 in relation to the target 3.

The electronic control system 10 is also configured so as to determine the relative pose of each auxiliary image acquisition device 11 in relation to the other auxiliary image acquisition device 11 and/or the absolute pose, on the basis of the poses of the auxiliary image acquisition devices 11 determined in relation to the target 3.

The technical effect obtained thanks to the combined use of the auxiliary image acquisition devices 11 and the target 3 present in the base unit 2, is represented by the fact that the electronic control system 10 is designed to determine, with high precision, and completely automatically, the actual poses of the auxiliary image acquisition devices 11 in relation to the target 3. The Applicant found that by positioning the target 3 on the base unit 2, you obtain/define a convenient fixed reference in the vehicle measuring apparatus 1 that can be used to determine, with great precision, the actual poses of the two auxiliary image acquisition devices 11.

The control system 10 is also, conveniently, configured in order to determine the pose of each main image acquisition device 7 based on the poses of the auxiliary image acquisition devices 11. The pose of each main image acquisition device 7 in relation to the target 3 can be conveniently determined by the control system 10 by combining the information relating to its pose in relation to the corresponding auxiliary image acquisition device 11, with the information relating to the pose of the auxiliary image acquisition device 11 itself, determined in relation to the target 3.

The relative pose of each main image acquisition device 7 in relation to the other main image acquisition device 7 may be conveniently determined by the control system 10 by combining the information relating to the poses of the main image acquisition devices 7 determined in relation to the poses of the corresponding, adjacent auxiliary image acquisition devices 11.

The technical effect obtained is that of being able to determine, completely automatically and in real time, the actual pose of the main image acquisition devices 7 as well.

The control system 10 is also configured so as to calibrate the main image acquisition devices 7 based on the related determined poses. The calibration of the main image acquisition devices 7 may involve the electronic control system 10 determining an offset between the actual poses of the main image acquisition devices 7 and the poses of the same stored during a previous calibration. The control system 10 may be configured so as to regulate or adjust, during calibration, one or more control parameters connected to the main image acquisition devices 7 based on the determined offset.

The technical effect obtained is that of ensuring that the vehicle measuring apparatus 1 carries out, completely automatically, the calibration (self-calibration) of the main image acquisition devices 7.

It remains understood that the control system 10 may be configured so as to carry out, in addition to or alternatively to, a calibration of the auxiliary image acquisition devices 11 of the whole that is similar to that described above implemented in the main image acquisition devices 7.

The electronic control system 10 may also be configured so as to conveniently determine the position of each of the two ends 5a of the support bar 5 based on the (relative or absolute) poses of the two main image acquisition devices 7, and/or based on the (relative or absolute) poses of the two auxiliary image acquisition devices 11.

The electronic control system 10 may also be conveniently configured to conveniently detect/determine a deformation of the support bar 5 based on the poses of the auxiliary image acquisition devices 11 and/or based on the position of each of the two ends 5a of the support bar 5.

The technical effect obtained is that of detecting, in real time, deformation of the support bar 5 caused by collisions and/or thermal expansions. The deformation may be determined based on offsets of the ends 5a in relation to a predetermined condition. Having determined the deformation of the support bar 5 and, thus, the relative offsets, the electronic control system 10 may, conveniently, be designed to selectively carry out an automatic calibration of the devices of the vehicle measuring apparatus 1 such as: the main image acquisition devices 7, and/or the auxiliary image acquisition devices 11, and/or the calibration devices 15 and 16.

The electronic control system 10 may also be configured so as to conveniently determine the position of the support bar 5 in relation to the target 3 or to the base unit 2, based on the positions of its two ends 5a.

An additional technical effect obtained is that of being designed to determine, completely automatically, any variations in size or shape of the support bar 5a.

An additional technical effect obtained is that of being able to determine, moment by moment, the position of the support bar 5 in relation to the target 3, i.e., the base unit 2. As will be explained in detail in the discussion that follows, the determination of the position of the support bar 5, in real time, makes it possible to automatically determine, indirectly, the position of other devices present in the vehicle measuring apparatus 1 too and used in the measuring methods.

According to this invention, the electronic control system 10 may be configured so as to determine and store, completely automatically, in the memory unit, repeatedly, for example at predetermined intervals, the poses and/or calibration of the auxiliary image acquisition devices 11, and/or the poses and/or the calibration of the main image acquisition devices 7, and/or the positions of the ends 5a, and/or the position of the support bar 5.

The technical effect is that of strongly reducing the risk of error caused by any alterations of the poses of the main image acquisition devices 7 and/or the auxiliary 11 ones, and/or by alterations in the size or shape of the support bar 5.

With reference to the embodiment shown in Figures 1 to 7, the base unit 2 may conveniently comprise at least one two-dimensional target 3. The target 3 may conveniently comprise at least one two-dimensional image (quadrangular, for example rectangular) that represents a predetermined pattern. In the example illustrated, in Figures 1-5, the pattern has a shape containing graphic elements. In the embodiment shown in Figures 1-5, the graphic elements may be depicted on a flat surface having a neutral-coloured background, preferably a white background.

In the example illustrated in Figures 1-5, the target 3 is made on a panel 3a. The panel 3a is coupled to the body of the base unit 2 in a position so as to ensure that the image of the target 3 can be observed simultaneously from the two auxiliary image acquisition devices 11. The panel 3a preferably lies on a plane that is approximately horizontal. The panel 3a is preferably arranged on the upper surface of the base unit 2 so as to be positioned below the support bar 5, preferably below a central portion 5b of the same. The panel 3a may consist of, for example, a quadrangular slab or lamina, preferably rectangular, based on stiff material, for example metal. The two-dimensional target 3 is made on the upper face of the panel 3a, opposite the plane 3.

With reference to Figures 5, 6, and 7, the main image acquisition devices 7 and the auxiliary 11 ones may comprise video or photographic cameras. It remains understood that the video or photographic cameras may comprise digital video or photographic cameras operating to acquire images in the range of the whole electromagnetic spectrum or, alternatively or additionally, selectively within a predetermined range of the electromagnetic spectrum (for example, the infrared spectrum). The angular orientation of the visual field connected to the pose of an image acquisition device (auxiliary 11 or main 7) may indicate, for example, the angular orientation of the optical axis of the video camera in relation to the target 3.

According to the preferred embodiment shown in Figure 5, the main image acquisition devices 7 and the auxiliary 11 ones are conveniently integrated/arranged rigidly/stably in the same electronic image acquisition equipment 12 mounted on the end 5a of the support bar 5. The electronic image acquisition equipment 12 may comprise, for example, an external protective casing 12a made of stiff material (for example polymer) with an approximately box-shaped form that is rigidly/stably fixed to the end 5a of the support bar 5 and permanently/stably houses, inside, a main image acquisition device 7 and an auxiliary image acquisition device 11.

The technical effect of the integration of the main image acquisition devices 7 and the auxiliary 11 ones in a single module is that of ensuring the maintenance of the relative pose between the same and to thus increase the robustness of the precision both during the calibration and during the determination of the positions.

According to a possible embodiment illustrated in Figure 5, the main image acquisition device 7 may comprise an electronic board 7a (with circuits and electronic components) that is stably installed (fixed) inside the external casing 12a and supports an optoelectronic module 7b. The optoelectronic module 7b may comprise, for example, an optical group and may be installed on the electronic board 7a so as to face a through hole made on a vertical wall of the external casing 12a. The optical assembly may be installed so that its visual field is oriented towards the vehicle 9.

According to the embodiment illustrated in Figure 5, the auxiliary image acquisition device 11 comprises an electronic board 11a (with circuits and electronic components) stably installed in the external casing 12a below the electronic board 7a and supports an optoelectronic module 11b facing a side opening 12b of the external casing 12a facing the base unit 2. The optoelectronic module 11b may comprise an optical assembly that is preferably installed on the electronic board so that its visual field is oriented towards the underlying target 3.

According to a preferred embodiment shown in Figures 1-5, the vehicle measuring apparatus 1 also comprises a support column 14 that extends cantilevered from the base unit 2 above the same along a vertical axis B. The support column 14 may be mechanically coupled to the base unit 2 so as to rotate around the axis B in relation to the base unit 2 itself. The rotation of the support column 14 around the axis B may be carried out via an electromechanical assembly (actuators, and/or electric motors) (not illustrated) based on controls provided by the electronic control system 10.

With reference to Figures 1-5, the support structure 4 may be mounted on the support column 14. The support structure 4 is mounted on the support column 14 so as to shift vertically along the axis B, from and towards the base unit 2. The vertical movement of the support structure 4 may be carried out via electromechanical components (actuators, and/or electric motors) (not illustrated) based on controls provided by the electronic control system 10.

The support structure 4 is also mechanically coupled to the support column 14 so that the rotation of the latter around the axis B determines a corresponding rotation of the support structure 4 around the axis B itself. In the example illustrated, the above-mentioned vertical and/or rotary movement of the support structure 4 determines the same vertical, and respectively rotary, movement of the support bar 5 in relation to the base unit 2, and, thus, in relation to the target 3 (along and around the axis B).

The support bar 5 may also be coupled to the support structure 4 so as to axially translate along the axis A, staying horizontal, so as to vary the position of the related ends 5a in relation to the base unit 2 and, thus, to the target 3. The support bar 5 may be moved along the axis A via an electromechanical assembly (actuators, and/or electric motors) (not illustrated) based on controls imparted by the electronic control system 10.

According to one embodiment shown in Figures 1-5, one of the calibration devices of the vehicle measuring system 6, indicated with 15 in Figures 1-5, comprises a target panel that is designed for calibrating one or more sensors 100a consisting of the ADAS video cameras of the vehicle 9. According to one embodiment, the target panel of the calibration device 15 may comprise a monitor/display (flat, LCD, or OLED screen or the like) designed, in use, to display, on command, a digital image of an ADAS calibration target that depends on the optical ADAS sensor to be calibrated.

According to the preferred embodiment shown in Figures 1-5, the calibration device 15 is stably coupled to the support structure 4 so that its vertical movement along the axis B, and/or its rotation around the axis B, is caused by the vertical movement, and, respectively, by the rotation of the support structure 4 along and around the axis B itself. The vertical and/or rotary movement of the calibration device 15 may, thus, be selectively controlled by the control system 10 via the control of the electromechanical components (actuators, and/or electric motors) that selectively control the rotation of the column 14 and/or the vertical movement of the support structure 4.

The control system 10 may be conveniently configured so as to control/determine, moment by moment, or in real time, the position of the calibration device 15 based on the positions of the ends 5a of the support bar 5 determined in relation to the target 3. The support bar 5 and the calibration device 15 are, in fact, mechanically coupled to the support structure 4 so as to carry out the same movements. Therefore, determining moment by moment the position of the ends 5a of the support bar 5, it is possible to conveniently determine the position of the calibration device 15 in relation to the target 3.

The technical effect is that of being able to control, automatically, and moment by moment, the position of the calibration device 15 without the aid of sensors and/or complex and costly mechanisms, such as encoders, resolvers, or the like, but just using the above-mentioned auxiliary image acquisition devices 11.

An additional technical effect consists in the fact of being able to know/immediately obtain, upon the start-up/switching-on of the vehicle measuring apparatus 1, the position of the calibration device 15 based on the target images provided by the auxiliary image acquisition devices 11 (auto-zero).

One of the calibration devices, identified with 16 in the Figures 1-5, comprises a radar panel designed for calibrating the ADAS radar sensors. The radar panel is coupled to the support bar 5. In particular, the radar panel is coupled to the support bar 5 in an axially fixed position.

The control system 10 may be conveniently configured so as to control/determine, moment by moment, or in real time, the position of the calibration device 16 based on the positions of the ends 5a of the support bar 5.

The technical effect is that of being designed to control, automatically and moment by moment, the horizontal position of the calibration device 16 as well, without the aid of sensors and/or mechanisms, such as encoders, resolvers, or the like, but just using the auxiliary image acquisition devices 11.

An additional technical effect consists in the fact of being able to know/immediately obtain, upon the start-up/switching-on of the vehicle measuring apparatus 1, the position of the calibration device 16 as well, based on the target images provided by the auxiliary image acquisition devices 11.

According to the preferred embodiment shown in Figure 1, the electronic control system 10 may comprise at least one computer. The computer may preferably be a tablet computer or any similar computer device. The computer may preferably be operationally connected to the electromechanical components mentioned above (actuators, and/or electric motors) and/or with image acquisition devices 7 and 11 so as to be designed to carry out, with the same, a two-way communication of the data/signals, preferably a wireless communication.

With reference to Figure 4, the support bar 5 may comprise two connection mechanisms 18, for example hinges, that connect the two opposite ends of the central portion 5b of the support bar 5 to the corresponding side portions of the support bar 5 itself that support the image acquisition devices 7 and 11. The connection mechanisms 18 are each structured to enable a lateral portion of the support bar 5 to rotate between an operating position (Figure 1) wherein the side portion is horizontal (coaxial to the axis A) and aligned (parallel) to the central portion 5b, and a rest position (Figure 4) (minimum dimensions) in which the side portion of the support bar 5 is arranged orthogonal to the (vertical) axis A so as to be positioned approximately to the side of the vertical side of the calibration device 15. The technical effect obtained is that of enabling the reduction of the lateral bulk of the support bar 5 in the vehicle measuring apparatus 1 when it is not operating.

It is understood that this invention is not limited to the use of the main image acquisition devices 7, but may also involve a vehicle measuring apparatus 1 that, alternatively, may not have the main image acquisition devices 7 mentioned above.

With reference to Figure 1, the method of operation of the vehicle measuring apparatus 1 will be described below in which it is imagined, for the purpose of improving the clarity of this description, that the memory unit of the electronic control system 10 contains: the poses of the auxiliary image acquisition devices 11, preferably the poses of the main image acquisition devices 7 (if present), the position of the support bar 5, and/or of its ends 5a, the position of the calibration devices 15 and 16. It is understood that the poses and/or positions may be stored in the memory unit (in relation to a common reference system) during a step prior to implementing the method described below. This previous step may correspond, for example, to a production step wherein the configuration and/or set-up of the apparatus was carried out, and/or a calibration step and/or a previous calibration step.

Initially, a step is provided for positioning the vehicle measuring apparatus 1 before the vehicle 9 and for rotating (when the vehicle measuring apparatus is provided with the mechanisms 18) the two side portions of the support bar 5 downwards from the rest position (Figure 4) to the operation position (Figure 1).

Following the action of the vehicle measuring apparatus 1, the method of operation involves implementing the following steps: capturing the target images via the auxiliary image acquisition devices 11, and processing the target images to determine and store at least the actual poses of the auxiliary image acquisition devices 11 in relation to the target 3 (base unit 2).

The method of operation may also comprise the step of processing the target images to determine and store the actual poses of the main image acquisition devices 7 based on the actual poses of the auxiliary image acquisition devices 11 determined in relation to the target 3.

The method of operation may also comprise the step of determining the offset/error between the actual pose determined of each main image acquisition device 7 and its pose previously stored in the memory unit. In this step, the method of operation may comprise the step of implementing the procedures for correcting the position/orientation of the main image acquisition devices 7 based on the determined offset. In other words, the method of operation may comprise the step of calibrating the main image acquisition devices 7 based on the actual poses determined by the processing of the target images.

The method of operation may also comprise, alternatively and/or additionally, the step of automatically calibrating the auxiliary image acquisition devices 11 based on the related poses actually determined. For example, this step may be included when the vehicle measuring apparatus 1 does not have the main image acquisition devices 7.

In this step, the method of operation may comprise the step of determining the offset/error between the actual, determined pose of the auxiliary acquisition device 11 and its pose previously stored in the memory unit. In this step, the method of operation may comprise the step of implementing procedures for correcting the position/orientation of the auxiliary image acquisition devices 11 based on the determined offset.

The method of operation may also comprise the step of determining, in response to control signals provided by the electronic control system 10, the position of the ends 5a of the support bar 5 based on the actual poses of the auxiliary image acquisition devices 11. Conveniently, the position of the ends 5a of the support bar 5 may be determined during the handling of the support bar 5 itself, so as to selectively control its vertical movement (along the axis B), the rotary movement (around the axis B), and the axial movement (along the axis A).

The method of operation may also be conveniently configured so as to conveniently detect/determine a deformation of the support bar 5 based on the poses of the auxiliary image acquisition devices 11 and/or based on the position of each of the two ends 5a of the support bar 5.

The method is designed to selectively carry out automatic calibration of the devices of the vehicle measuring apparatus 1 based on the deformation of the support bar 5. The automatic calibration may, preferably, be carried out on at least the following devices: the main image acquisition devices 7, and/or the auxiliary image acquisition devices 11, and/or the calibration devices 15 and 16.

The method of operation may also comprise the step of determining, in response to control signals provided by the electronic control system 10, the position of the calibration devices 15 and/or 16 based on the positions of the ends 5a of the support bar 5. Conveniently, the position of the calibration devices 15 and/or 16 may be determined during the handling of the same so as to selectively control its movements.

The vehicle measuring apparatus 1 makes it possible to maintain control of the relative pose and/or the absolute pose of the two main image acquisition devices 7 and/or auxiliary 11 ones used by the measuring methods described above. Therefore, any time the position and/or orientation of the two main image acquisition devices 7 is subject to a change, for example an accidental one or following the repositioning of the side portions hinged to the support bar 5 in the operating position, the vehicle measuring apparatus is designed to measure this change with great precision without requiring operator interventions.

In addition, the vehicle measuring apparatus is designed to determine, with precision, the positions of the other devices mounted on the support structure too, such as, for example the calibration devices 15 and 16 used for ADAS calibration, eliminating, in this method, the need to use other position sensors, thus reducing the complexity and costs of the vehicle measuring apparatus itself.

In addition, the vehicle measuring apparatus is designed to determine, with precision, the position of the support bar 5 too and of its two ends 5a during the direct and/or indirect movement of the same.

Finally, it is clear that the apparatus and method described above may be altered, or variations may be produced thereof, without, as a result, departing from the scope of this invention.

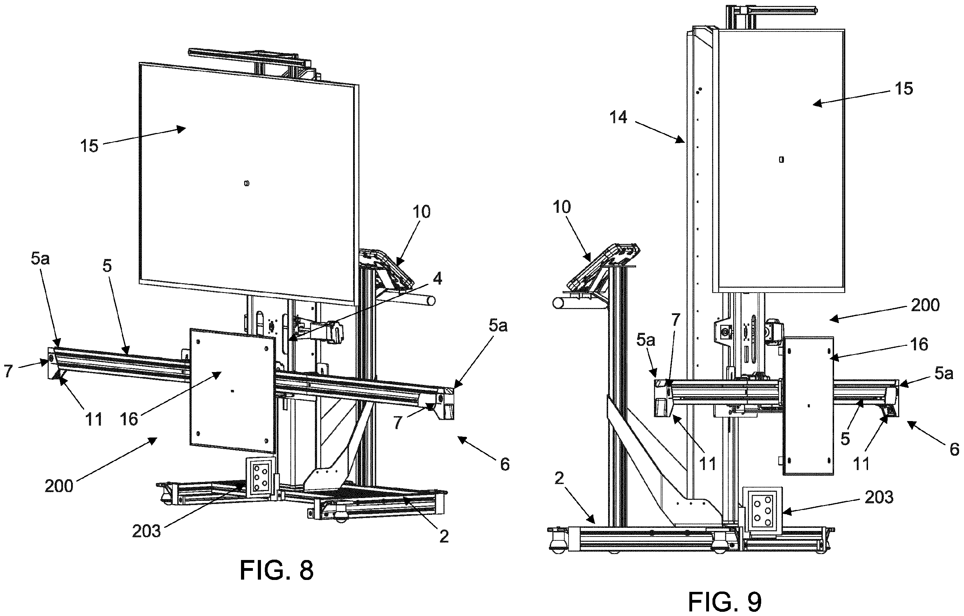

The embodiment shown in Figures 8 and 9 relates to a vehicle measuring apparatus 200, which is similar to the vehicle measuring apparatus 1 shown in Figures 1-7, and whose component parts will be identified, where possible, with the same reference numbers that identify corresponding parts of the vehicle measuring apparatus 1. The vehicle measuring apparatus 200 differs from the first vehicle measuring apparatus 1 in that the base unit 2 preferably comprises, centrally, a vertical target 203. The vertical target 203 comprises two opposite faces, each of which has a two-dimensional image oriented so as to be captured by a corresponding auxiliary image acquisition device 11.

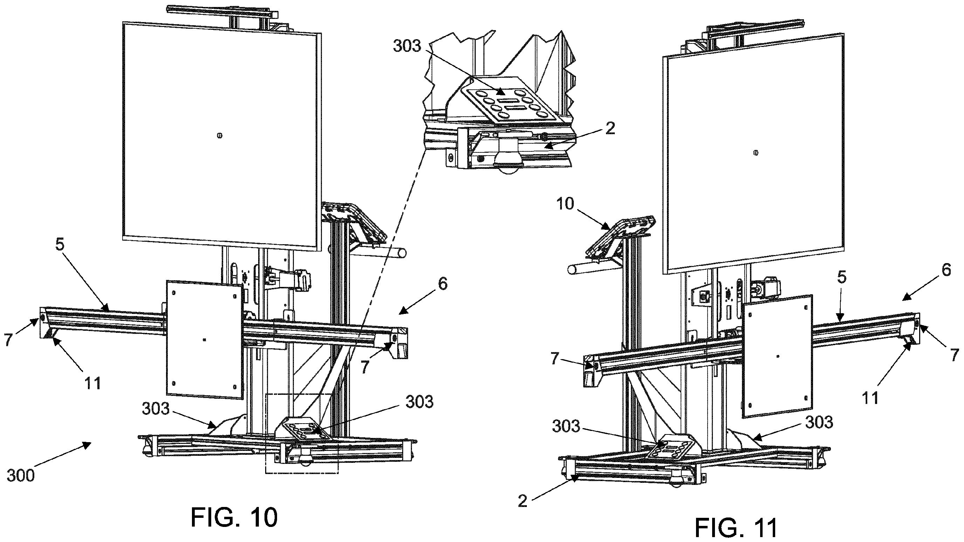

The embodiment shown in Figures 10 and 11 relates to a vehicle measuring apparatus 300, which is similar to the vehicle measuring apparatus 1 shown in Figures 1-7, and whose component parts will be identified, where possible, with the same reference numbers that identify corresponding parts of the vehicle measuring apparatus 1. The vehicle measuring apparatus 300 differs from the first vehicle measuring apparatus 1 in that the base unit 2 comprises two, lateral targets 303. The two targets 303 are arranged on opposite sides in relation to the column 14 and at a certain distance from each other. The two targets 303 each comprise a flat upper face slightly inclined in relation to a flat horizontal plane on which there is a two-dimensional image oriented so as to be captured by a corresponding auxiliary image acquisition device 11.

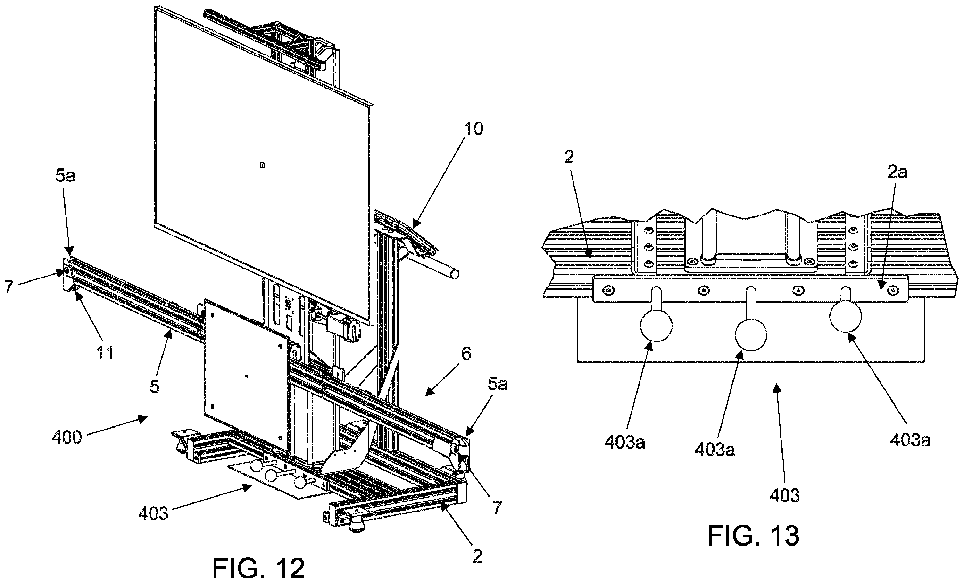

The embodiment shown in Figures 12 and 13 relates to a vehicle measuring apparatus 400, which is similar to the vehicle measuring apparatus 1 shown in Figures 1-7, and whose component parts will be identified, where possible, with the same reference numbers that identify corresponding parts of the vehicle measuring apparatus 1. The vehicle measuring apparatus 400 differs from the vehicle measuring apparatus 1 in that the base unit 2 comprises a three-dimensional target 403. The three-dimensional target 403 comprises three reference elements 403a that extend cantilevered from the front side of the base unit 2 below the support bar 5. The three reference elements 403a are approximately horizontal and extend parallel and spaced apart from each other so as to have the corresponding ends in three different positions, i.e., at three different distances in relation to the front side of the base unit 2. Each reference element 403a comprises a rod on the free end of which there is a spherical body. In use, the auxiliary image acquisition devices 11 acquire the images of the three-dimensional target 403, and the electronic control system 10 determines the three absolute reference points connected to the three ends of the three reference elements. The three absolute reference points enable the electronic control system 10 to determine, via the implementation of computer vision functions and/or algorithms the pose of the auxiliary image acquisition devices 11 in relation to the target 403a.

It remains understood that according to a possible embodiment the body of the base unit 2 can be shaped so as to form a two-dimensional or three-dimensional target 3. In other words, the base unit 2 can directly form the target 3 defining the reference point that can be observed from the auxiliary image acquisition devices 11.

## Claims

1. A vehicle measuring apparatus (1) comprising:
a base unit (2) which rests on a plane (P) and comprises a target (3) (203) (303) (403),
a support structure (4) which is coupled to said base unit (2) and is provided with a support bar (5) which has an approximately horizontal reference axis (A) and is arranged above said base unit (2),
two auxiliary image acquisition devices (11) which are mounted on said support bar (5) so that the respective image acquisition visual fields are oriented towards said base unit (2) so as to capture target images containing said target (3) (203) (303) (403),
an electronic control system (10) which is operatively connected to said auxiliary image acquisition devices (11) to receive said target images and is configured in order to determine the poses of the auxiliary image acquisition devices (11) on the basis of said target-images.

2. The vehicle measuring apparatus according to claim 1, comprising main image acquisition devices (7) which are mounted on the two respective opposite ends (5a) of said support bar (5) and are arranged so that the respective image acquisition visual fields are oriented towards a vehicle (9) to capture vehicle images associated with said vehicle (9),
said electronic control system (10) being configured in order to determine the poses of said main image acquisition devices (7) based on the determined poses of said auxiliary image acquisition devices (11).

3. The vehicle measuring apparatus according to claim 2, wherein said electronic control system (10) is configured to automatically calibrate said main image acquisition devices (7) and/or said auxiliary image acquisition devices (11) based on the respective determined poses.

4. The vehicle measuring apparatus according to any of the foregoing claims, wherein said electronic control system (10) is further configured to determine positions of said support bar (5) and/or its ends (5a) based on said determined poses of said auxiliary image acquisition devices (11).

5. The vehicle measuring apparatus according to any of the foregoing claims, comprising
a column (14) which extends cantilevered from said base unit (2) along a vertical axis (B),
and at least a ADAS calibration device (15)(16) which is designed to be detected by an ADAS sensor (100a) of said vehicle (9) during a calibration of said ADAS sensor (100a),
said support structure (4) supports said ADAS calibration device (15) (16) and is mounted on said column (14) in order to move selectively along said vertical axis (B) and/or around said vertical axis (B) and/or orthogonally to said vertical axis (B),
said electronic control system (10) is further configured to determine the position of said calibration device (15) (16) based on said determined poses of said auxiliary image acquisition devices (11).

6. The vehicle measuring apparatus according to claim 2 and any of the foregoing claims from 3 to 5, wherein said auxiliary image acquisition devices (11) are rigidly arranged on the opposite ends (5a) of said support bar (5) close to the relative main image acquisition devices (7).

7. The vehicle measuring apparatus according to claim 2 and any of claims from 3 to 6, wherein each auxiliary image acquisition device (11) is rigidly integrated with a relative main image acquisition device (7) in order to form a single electronic module (12), which is arranged on one end (5a) of said support bar (5).

8. The vehicle measuring apparatus according to any of the foregoing claims, wherein said target (3) (203) (303) (403) of said base unit (2) is two-dimensional or tree-dimensional.

9. The vehicle measuring apparatus according to any of the foregoing claims from 2 to 8, wherein said electronic control system (10) is configured to determine information relating to the relative position between said vehicle (9) and said vehicle measuring apparatus (1) and/or information concerning the wheels alignment of one or more wheels of said vehicle (9) on the basis of said vehicle images.

10. The vehicle measuring apparatus according to any of the foregoing claims, wherein said support bar (5) is provided with mechanisms (18) designed to rotate two opposite lateral portions of said bar (5) compared to a central portion (5b) of said support bar (5) between a horizontal operative position and a vertical rest position, and vice-versa.

11. The vehicle measuring apparatus according to any of the foregoing claims, wherein said electronic control system (10) is further configured to detect/determine a deformation of said support bar (5) based on said determined poses of said auxiliary image acquisition devices (11).

12. A method of operation of a vehicle measuring apparatus (1) comprising:
a base unit (2) which rests on a plane (P) and comprises a target (3) (203) (303) (403),
a support structure (4) which is coupled to said base unit (2) and is provided with a support bar (5) which has an approximately horizontal reference axis (A) and is arranged above said base unit (2),
two auxiliary image acquisition devices (11) which are mounted on said support bar (5) so that the respective image acquisition visual fields are oriented towards said base unit (2) so as to capture target images containing said target (3) (203) (303) (403),
said method comprising the steps of:
receiving by an electronic control system (10) said target images from said auxiliary image acquisition devices (11) and determining by said electronic control system (10) the poses of the auxiliary image acquisition devices (11) on the basis of said target-images.

13. The method according to claim 12, wherein said vehicle measuring apparatus (1) comprises main image acquisition devices (7) which are mounted on the two respective opposite ends (5a) of said support bar (5) and are arranged so that the respective image acquisition visual fields are oriented towards a vehicle (9) to capture vehicle images associated with said vehicle (9),
said method comprising the step of determining by said electronic control system (10) the poses of said main image acquisition devices (7) based on the determined poses of said auxiliary image acquisition devices (11).

14. The method according to claim 13, comprising the steps of automatically calibrating by said electronic control system (10) said main image acquisition devices (7) and/or said auxiliary image acquisition devices (11) based on the respective determined poses.

15. The method according to any of the foregoing claims from 12 to 14, comprising the step of detecting/determining by said electronic control system (10) a deformation of said support bar (5) based on said determined poses of said auxiliary image acquisition devices (11).

## Patentansprüche

1. Fahrzeugmesseinrichtung (1), umfassend:
eine Basiseinheit (2), die auf einer Ebene (P) ruht und ein Ziel (3) (203) (303) (403) umfasst,
eine Trägerstruktur (4), die mit der Basiseinheit (2) gekoppelt ist und mit einer Trägerstange (5) versehen ist, die eine annähernd horizontale Referenzachse (A) aufweist und oberhalb der Basiseinheit (2) angeordnet ist,
zwei Hilfsbilderfassungsvorrichtungen (11), die auf der Trägerstange (5) so angebracht sind, dass die jeweiligen Bilderfassungssichtfelder auf die Basiseinheit (2) ausgerichtet sind, um Zielbilder aufzunehmen, die das Ziel (3) (203) (303) (403) enthalten,
ein elektronisches Steuersystem (10), das operativ mit den Hilfsbilderfassungsvorrichtungen (11) verbunden ist, um die Zielbilder zu empfangen, und das konfiguriert ist, um die Stellungen der Hilfsbilderfassungsvorrichtungen (11) auf der Grundlage der Zielbilder zu bestimmen.

2. Fahrzeugmesseinrichtung nach Anspruch 1, die Hauptbilderfassungsvorrichtungen (7) umfasst, die auf den zwei jeweils gegenüberliegenden Enden (5a) der Trägerstange (5) angebracht sind und so angeordnet sind, dass die jeweiligen Bilderfassungssichtfelder auf ein Fahrzeug (9) ausgerichtet sind, um Fahrzeugbilder aufzunehmen, die dem Fahrzeug (9) zugeordnet sind,
wobei das elektronische Steuersystem (10) konfiguriert ist, um die Stellungen der Hauptbilderfassungsvorrichtungen (7) auf der Grundlage der bestimmten Stellungen der Hilfsbilderfassungsvorrichtungen (11) zu bestimmen.

3. Fahrzeugmesseinrichtung nach Anspruch 2, wobei das elektronische Steuersystem (10) konfiguriert ist, um die Hauptbilderfassungsvorrichtungen (7) und/oder die Hilfsbilderfassungsvorrichtungen (11) auf der Grundlage der jeweiligen bestimmten Stellungen automatisch zu kalibrieren.

4. Fahrzeugmesseinrichtung nach einem der vorstehenden Ansprüche, wobei das elektronische Steuersystem (10) ferner konfiguriert ist, um Positionen der Trägerstange (5) und/oder ihrer Enden (5a) auf der Grundlage der bestimmten Positionen der Hilfsbilderfassungsvorrichtungen (11) zu bestimmen.

5. Fahrzeugmesseinrichtung nach einem der vorstehenden Ansprüche, umfassend
eine Säule (14), die sich freitragend von der Basiseinheit (2) entlang einer vertikalen Achse (B) erstreckt,
und mindestens eine ADAS-Kalibrierungsvorrichtung (15) (16), die dazu ausgelegt ist, während einer Kalibrierung eines ADAS-Sensors (100a) von dem ADAS-Sensor (100a) des Fahrzeugs (9) erkannt zu werden,
wobei die Trägerstruktur (4) die ADAS-Kalibrierungsvorrichtung (15) (16) trägt und auf der Säule (14) angebracht ist, um sich selektiv entlang der vertikalen Achse (B) und/oder um die vertikale Achse (B) und/oder orthogonal zur vertikalen Achse (B) zu bewegen,
wobei das elektronische Steuersystem (10) ferner konfiguriert ist, um die Position der Kalibrierungsvorrichtung (15) (16) auf der Grundlage der bestimmten Stellungen der Hilfsbilderfassungsvorrichtungen (11) zu bestimmen.

6. Fahrzeugmesseinrichtung nach Anspruch 2 und nach einem der vorstehenden Ansprüche 3 bis 5, wobei die Hilfsbilderfassungsvorrichtungen (11) starr an den gegenüberliegenden Enden (5a) der Trägerstange (5) in der Nähe der jeweiligen Hauptbilderfassungsvorrichtungen (7) angeordnet sind.

7. Fahrzeugmesseinrichtung nach Anspruch 2 und nach einem der Ansprüche 3 bis 6, wobei jede Hilfsbilderfassungsvorrichtung (11) starr mit einer entsprechenden Hauptbilderfassungsvorrichtung (7) integriert ist, um ein einziges Elektronikmodul (12) zu bilden, das an einem Ende (5a) der Trägerstange (5) angeordnet ist.

8. Fahrzeugmesseinrichtung nach einem der vorstehenden Ansprüche, wobei das Ziel (3) (203) (303) (403) der Basiseinheit (2) zweidimensional oder dreidimensional ist.

9. Fahrzeugmesseinrichtung nach einem der vorstehenden Ansprüche 2 bis 8, wobei das elektronische Steuersystem (10) konfiguriert ist, um Informationen bezüglich der relativen Position zwischen dem Fahrzeug (9) und der Fahrzeugmesseinrichtung (1) und/oder Informationen bezüglich der Radausrichtung eines oder mehrerer Räder des Fahrzeugs (9) auf der Grundlage der Fahrzeugbilder zu bestimmen.

10. Fahrzeugmesseinrichtung nach einem der vorstehenden Ansprüche, wobei die Trägerstange (5) mit Mechanismen (18) bereitgestellt ist, die dazu ausgelegt sind, zwei gegenüberliegende seitliche Abschnitte der Stange (5) im Vergleich zu einem mittleren Abschnitt (5b) der Trägerstange (5) zwischen einer horizontalen Betriebsposition und einer vertikalen Ruheposition und umgekehrt zu drehen.

11. Fahrzeugmesseinrichtung nach einem der vorstehenden Ansprüche, wobei das elektronische Steuersystem (10) ferner konfiguriert ist, um eine Verformung der Trägerstange (5) auf der Grundlage der bestimmten Stellungen der Hilfsbilderfassungsvorrichtungen (11) zu erkennen/zu bestimmen.

12. Verfahren zum Betrieb einer Fahrzeugmesseinrichtung (1), umfassend:
eine Basiseinheit (2), die auf einer Ebene (P) ruht und ein Ziel (3) (203) (303) (403) umfasst,
eine Trägerstruktur (4), die mit der Basiseinheit (2) gekoppelt ist und mit einer Trägerstange (5) versehen ist, die eine annähernd horizontale Referenzachse (A) aufweist und oberhalb der Basiseinheit (2) angeordnet ist,
zwei Hilfsbilderfassungsvorrichtungen (11), die auf der Trägerstange (5) so angebracht sind, dass die jeweiligen Bilderfassungssichtfelder auf die Basiseinheit (2) ausgerichtet sind, um Zielbilder aufzunehmen, die das Ziel (3) (203) (303) (403) enthalten,
wobei das Verfahren die folgenden Schritte umfasst:
Empfangen der Zielbilder von den Hilfsbilderfassungsvorrichtungen (11) durch ein elektronisches Steuersystem (10) und Bestimmen der Stellungen der Hilfsbilderfassungsvorrichtungen (11) auf der Grundlage der Zielbilder durch das elektronische Steuersystem (10).

13. Verfahren nach Anspruch 12, wobei die Fahrzeugmesseinrichtung (1) Hauptbilderfassungsvorrichtungen (7) umfasst, die auf den zwei jeweiligen gegenüberliegenden Enden (5a) der Trägerstange (5) angebracht und so angeordnet sind, dass die jeweiligen Bilderfassungssichtfelder auf ein Fahrzeug (9) ausgerichtet sind, um die dem Fahrzeug (9) zugeordneten Fahrzeugbilder aufzunehmen,
wobei das Verfahren den Schritt umfasst, durch das elektronische Steuersystem (10) die Stellungen der Hauptbilderfassungsvorrichtungen (7) auf der Grundlage der bestimmten Stellungen der Hilfsbilderfassungsvorrichtungen (11) zu bestimmen.

14. Verfahren nach Anspruch 13, umfassend die Schritte des automatischen Kalibrierens der Hauptbilderfassungsvorrichtungen (7) und/oder der Hilfsbilderfassungsvorrichtungen (11) durch das elektronische Steuersystem (10) auf der Grundlage der jeweiligen bestimmten Stellungen.

15. Verfahren nach einem der vorstehenden Ansprüche 12 bis 14, umfassend den Schritt des Erkennens/Bestimmens einer Verformung der Trägerstange (5) durch das elektronische Steuersystem (10) auf der Grundlage der bestimmten Stellungen der Hilfsbilderfassungsvorrichtungen (11).

## Revendications

1. Appareil de mesure de véhicule (1), comprenant :
une unité de base (2) qui repose sur un plan (P) et comprend une cible (3)(203)(303)(403),
une structure de support (4) accouplée à ladite unité de base (2) et étant pourvue d'une barre de support (5) ayant un axe de référence approximativement horizontal (A) et étant agencé au-dessus de ladite unité de base (2),
deux dispositifs auxiliaires d'acquisition d'images (11) qui sont montés sur ladite barre de support (5) de sorte que les champs visuels d'acquisition d'images respectifs sont orientés vers ladite unité de base (2) de manière à capturer des images cibles contenant ladite cible (3) (203) (303) (403),
un système de commande électronique (10) connecté de manière opérationnelle auxdits dispositifs auxiliaires d'acquisition d'images (11) pour recevoir lesdites images cibles et configuré pour déterminer les positions des dispositifs auxiliaires d'acquisition d'images (11) sur la base desdites images cibles.

2. Appareil de mesure de véhicule selon la revendication 1, comprenant des dispositifs principaux d'acquisition d'images (7) qui sont montés sur les deux extrémités opposées respectives (5a) de ladite barre de support (5) et sont agencés de sorte que les champs visuels d'acquisition d'images respectifs sont orientés vers un véhicule (9) pour capturer des images de véhicule associées audit véhicule (9),
ledit système de commande électronique (10) étant configuré afin de déterminer les positions desdits dispositifs principaux d'acquisition d'images (7) sur la base des positions déterminées desdits dispositifs auxiliaires d'acquisition d'images (11).

3. Appareil de mesure de véhicule selon la revendication 2, dans lequel ledit système de commande électronique (10) est configuré pour étalonner automatiquement lesdits dispositifs principaux d'acquisition d'images (7) et/ou lesdits dispositifs auxiliaires d'acquisition d'images (11) sur la base des positions respectives déterminées.

4. Appareil de mesure de véhicule selon l'une quelconque des revendications précédentes, dans lequel ledit système de commande électronique (10) est en outre configuré pour déterminer des positions de ladite barre de support (5) et/ou de ses extrémités (5a) sur la base desdites positions déterminées desdits dispositifs auxiliaires d'acquisition d'images (11).

5. Appareil de mesure de véhicule selon l'une quelconque des revendications précédentes, comprenant
une colonne (14) qui s'étend en porte-à-faux à partir de ladite unité de base (2) le long d'un axe vertical (B),
et au moins un dispositif d'étalonnage ADAS (15)(16) conçu pour être détecté par un capteur ADAS (100a) dudit véhicule (9) lors d'un étalonnage dudit capteur ADAS (1 00a),
ladite structure de support (4) supporte ledit dispositif d'étalonnage ADAS (15) (16) et est montée sur ladite colonne (14) afin de se déplacer de manière sélective le long dudit axe vertical (B) et/ou autour dudit axe vertical (B) et/ou de manière orthogonale audit axe vertical (B),
ledit système de commande électronique (10) est en outre configuré pour déterminer la position dudit dispositif d'étalonnage (15) (16) sur la base desdites positions déterminées desdits dispositifs auxiliaires d'acquisition d'images (11).

6. Appareil de mesure de véhicule selon la revendication 2 et l'une quelconque des revendications précédentes 3 à 5, dans lequel lesdits dispositifs auxiliaires d'acquisition d'images (11) sont agencés de manière rigide sur les extrémités opposées (5a) de ladite barre de support (5) à proximité des dispositifs principaux relatifs d'acquisition d'images (7).

7. Appareil de mesure de véhicule selon la revendication 2 et l'une quelconque des revendications 3 à 6, dans lequel chaque dispositif auxiliaire d'acquisition d'images (11) est intégré de manière rigide à un dispositif principal relatif d'acquisition d'images (7) afin de former un module électronique unique (12), qui est agencé sur une extrémité (5a) de ladite barre de support (5).

8. Appareil de mesure de véhicule selon l'une quelconque des revendications précédentes, dans lequel ladite cible (3)(203)(303)(403) de ladite unité de base (2) est bidimensionnelle ou tridimensionnelle.

9. Appareil de mesure de véhicule selon l'une quelconque des revendications précédentes 2 à 8, dans lequel ledit système de commande électronique (10) est configuré pour déterminer des informations relatives à la position relative entre ledit véhicule (9) et ledit appareil de mesure de véhicule (1) et/ou des informations concernant l'alignement des roues d'une ou de plusieurs roues dudit véhicule (9) sur la base desdites images de véhicule.

10. Appareil de mesure de véhicule selon l'une quelconque des revendications précédentes, dans lequel ladite barre de support (5) est pourvue de mécanismes (18) conçus pour faire tourner deux parties latérales opposées de ladite barre (5) par rapport à une partie centrale (5b) de ladite barre de support (5) entre une position opérationnelle horizontale et une position de repos verticale, et vice-versa.

11. Appareil de mesure de véhicule selon l'une quelconque des revendications précédentes, dans lequel ledit système de commande électronique (10) est en outre configuré pour détecter/déterminer une déformation de ladite barre de support (5) sur la base desdites positions déterminées desdits dispositifs auxiliaires d'acquisition d'images (11).

12. Procédé de fonctionnement d'un appareil de mesure de véhicule (1) comprenant :
une unité de base (2) qui repose sur un plan (P) et comprend une cible (3)(203)(303)(403),
une structure de support (4) accouplée à ladite unité de base (2) et étant pourvue d'une barre de support (5) ayant un axe de référence approximativement horizontal (A) et étant agencé au-dessus de ladite unité de base (2),
deux dispositifs auxiliaires d'acquisition d'images (11) qui sont montés sur ladite barre de support (5) de sorte que les champs visuels d'acquisition d'images respectifs sont orientés vers ladite unité de base (2) de manière à capturer des images cibles contenant ladite cible (3) (203) (303) (403),
ledit procédé comprenant les étapes consistant à :
recevoir, par un système de commande électronique (10), lesdites images cibles en provenance desdits dispositifs auxiliaires d'acquisition d'images (11) et déterminer par ledit système de commande électronique (10) les positions des dispositifs auxiliaires d'acquisition d'images (11) sur la base desdites images cibles.

13. Procédé selon la revendication 12, dans lequel ledit appareil de mesure de véhicule (1) comprend des dispositifs principaux d'acquisition d'images (7) qui sont montés sur les deux extrémités opposées respectives (5a) de ladite barre de support (5) et sont agencés de sorte que les champs visuels d'acquisition d'images respectifs sont orientés vers un véhicule (9) pour capturer des images de véhicule associées audit véhicule (9),
ledit procédé comprenant l'étape consistant à déterminer, par ledit système de commande électronique (10), les positions desdits dispositifs principaux d'acquisition d'images (7) sur la base des positions déterminées desdits dispositifs auxiliaires d'acquisition d'images (11).

14. Procédé selon la revendication 13, comprenant les étapes consistant à étalonner de manière automatique par ledit système de commande électronique (10) lesdits dispositifs principaux d'acquisition d'images (7) et/ou lesdits dispositifs auxiliaires d'acquisition d'images (11) sur la base des positions respectives déterminées.

15. Procédé selon l'une quelconque des revendications précédentes 12 à 14, comprenant l'étape consistant à détecter/déterminer par ledit système de commande électronique (10) une déformation de ladite barre de support (5) sur la base desdites positions déterminées desdits dispositifs auxiliaires d'acquisition d'images (11)
